# EUROPEAN PATENT APPLICATION

(11) **EP 3 043 252 A1**
(43) Date of publication of application: **13.07.2016**
(21) Application number: 16150435.2
(22) Date of filing: 07.01.2016
(51) Int. Cl.: G06F 3/0485, G06F 3/0488, G06F 1/16

(54) **METHOD AND ELECTRONIC DEVICE FOR DISPLAYING ELECTRONIC DOCUMENT**

(30) Priority: 07.01.2015 KR 20150001904
(71) Applicant: Samsung Electronics Co., Ltd., Gyeonggi-do 16677 (KR)
(72) Inventor: Kim, Youngho, 16677 Suwon-si (KR)
(74) Representative: Nederlandsch Octrooibureau

(57) **Abstract**

A method for displaying an electronic document by an electronic device is provided. The method includes moving the electronic document in a display of the electronic document according to a user input, outputting an alert and temporarily stopping the moving of the electronic document when at least one edge of the electronic document reaches at least one boundary of the display, and displaying the electronic document having the at least one edge of the electronic document spaced apart from the at least one boundary of the display when an additional user input is received.

## Description

### TECHNICAL FIELD

The present disclosure relates to a method for displaying an electronic document and additional information related to the electronic document according to a user input, and an electronic device including the method.

### BACKGROUND

Recently, with the development of digital technologies, various electronic devices including mobile communication terminals, personal digital assistant (PDA), electronic organizers, smart phones, tablet personal computers (PC), and the like, which can perform communication and personal information processing while being carried, have been released. Such electronic devices have reached a mobile convergence stage of encompassing an area of other terminals without being confined to their own traditional unique areas. As a representative example, the electronic device may have various functions including call functions such as a voice call and a video call function, message transmission/reception functions such as a short message service (SMS), a multimedia message service (MMS), and an e-mail service, an electronic notebook function, a photography function, a broadcast reproduction function, a video reproduction function, a music reproduction function, an Internet function, a messenger function, a social networking service (SNS) function, and the like.

However, according to the related art, a method for displaying an electronic document by an electronic device including a touch screen has problems in that the electronic device does not display a background area outside the electronic document when the user terminates a touch after simple movement of the electronic document according to the touch or when the electronic document reaches a boundary or an edge of the electronic document after movement of the electronic document according to the user's touch input.

The above information is presented as background information only, to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a user with various behavior patterns related to moving an electronic document.

Another aspect of the present disclosure is to provide a portable electronic device or a fixed electronic device, which includes a touch sensitive device, and which can provide electronic document-related information using a background area outside an electronic document when the device moves or displays the electronic document according to the user's touch input.

In accordance with an aspect of the present disclosure, a method for displaying an electronic document according to various embodiments of the present disclosure is provided. The method includes moving an electronic document in a display according to a user input, outputting an alert and temporarily stopping the moving of the electronic document when at least one edge of the electronic document reaches at least one boundary of the display, and displaying the electronic document having the at least one edge of the electronic document spaced apart from the at least one boundary of the display when an additional user input is received.

In accordance with another aspect of the present disclosure, an electronic device according to various embodiments of the present disclosure is provided. The electronic device includes a display including a touch sensitive device, and a processor, wherein the processor may control a movement of an electronic document in a display according to a user input, output an alert and temporarily stop moving the electronic document in the display when at least one edge of the electronic document reaches at least one boundary of the display, and display the electronic document having the at least one edge spaced apart from the at least one boundary of the display when an additional user input is received.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating an electronic device within a network environment according to various embodiments of the present disclosure;
FIG. 2 is a block diagram illustrating an electronic device according to various embodiments of the present disclosure;
FIG. 3 is a block diagram illustrating a program module according to various embodiments of the present disclosure;
FIG. 4 is a flowchart illustrating a method for displaying an electronic document by an electronic device according to various embodiments of the present disclosure;
FIGS. 5A to 5F are views illustrating a method for displaying an electronic document by an electronic device according to the flowchart of FIG. 4, according to various embodiments of the present disclosure;
FIGS. 6A to 6C are flowcharts illustrating a method for displaying an electronic document by an electronic device according to various embodiments of the present disclosure;
FIGS. 7A to 7H are views illustrating a method for displaying an electronic document by an electronic device according to the flowcharts of FIGS. 6A to 6C, according to various embodiments of the present disclosure;
FIGS. 8A to 8D are flowcharts illustrating a method for displaying an electronic document by an electronic device according to various embodiments of the present disclosure;
FIGS. 9A to 9F are views illustrating a method for displaying an electronic document by an electronic device according to the flowcharts of FIGS. 8A to 8D, according to various embodiments of the present disclosure;
FIGS. 10A to 10D are flowcharts illustrating a method for displaying an electronic document by an electronic device according to various embodiments of the present disclosure; and
FIGS. 11A to 11F are views illustrating a method for displaying an electronic document by an electronic device according to the flowcharts of FIGS. 10A to 10D, according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a", "an", and "the", include plural referents unless the context clearly dictates otherwise. Thus, for example, reference to "a component surface" includes reference to one or more of such surfaces.

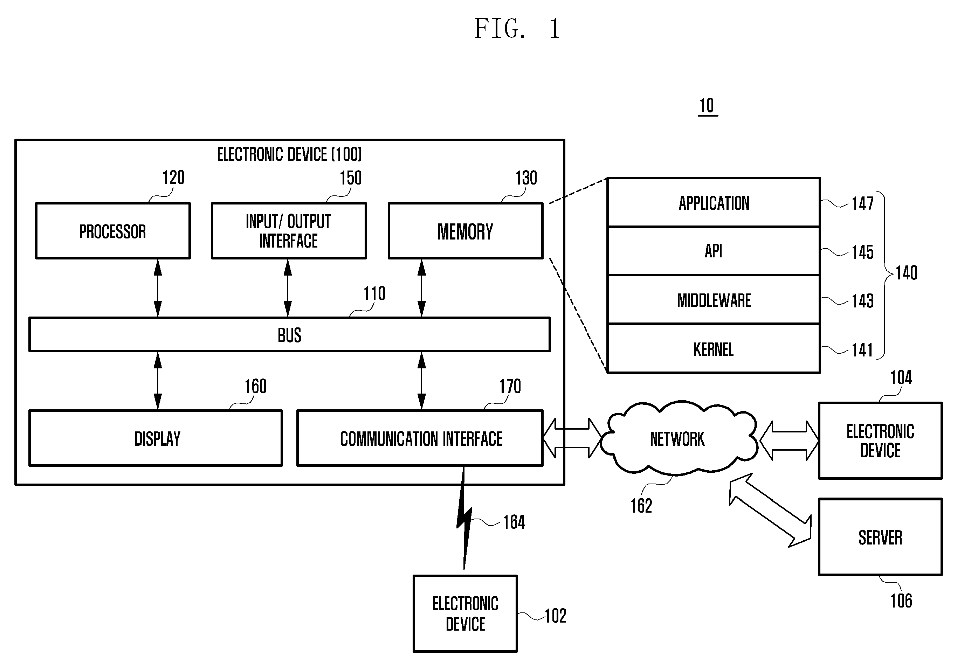

FIG. 1 illustrates a network environment including an electronic device according to various embodiments of the present disclosure.

Referring to FIG. 1, an electronic device 100 of a network environment 10 includes a bus 110, a processor 120, a memory 130, an input/output interface 150, a display 160 and a communication interface 170.

The bus 110 may be a circuit connecting the above described components and transmitting communication (for example, a control message) between the above described components.

The processor 120 receives commands from other components (for example, the memory 130, the input/output interface 150, the display 160, and the communication interface 170) through the bus 110, analyzes the received commands, and executes calculation and/or data processing according to the analyzed commands.

The memory 130 stores commands and/or data received from the processor 120 or other components (for example, the input/output interface 150, the display 160, or the communication interface 170) or generated by the processor 120 or other components. The memory 130 may include programming modules 140, for example, a kernel 141, middleware 143, an application programming interface (API) 145, and an application 147. Each of the aforementioned programming modules may be implemented by software, firmware, hardware, or a combination of two or more thereof.

The kernel 141 controls or manages system resources (for example, the bus 110, the processor 120, or the memory 130) used for executing an operation or function implemented by the remaining other programming modules, for example, the middleware 143, the API 145, or the application 147. Further, the kernel 141 provides an interface for accessing individual components of the electronic device 100 from the middleware 143, the API 145, or the application 147 to control or manage the components.

The middleware 143 performs a relay function of allowing the API 145 or the application 147 to communicate with the kernel 141 to exchange data. Further, regarding operation requests received from the application 147, the middleware 143 performs a control for the operation requests (for example, scheduling or load balancing) by using a method of assigning a priority, by which system resources (for example, the bus 110, the processor 120, the memory 130 and the like) of the electronic device 100 can be used, to the application 147.

The API 145 is an interface by which the application 147 can control a function provided by the kernel 141 or the middleware 143 and includes, for example, at least one interface or function (for example, command) for a file control, a window control, image processing, or a character control.

The input/output interface 150 can receive, for example, a command and/or data from a user, and transfer the received command and/or data to the processor 120 and/or the memory 130 through the bus 110. The display 160 can display an image, a video, and/or data to a user.

According to an embodiment of the present disclosure, the display 160 may display a graphic user interface image for interaction between the user and the electronic device 100. According to various embodiments of the present disclosure, the graphic user interface image may include interface information to activate a function for correcting color of the image to be projected onto the screen. The interface information may be in the form of, for example, a button, a menu, or an icon.

The communication interface 170 connects communication between the electronic device 100 and an external device (for example, electronic device 102, 104 or server 106). The communication interface 170 may access a network 162 or 164 through wireless or wired communication to communicate with the external device. The wireless communication includes at least one of, for example, Wi-Fi, Bluetooth (BT), near field communication (NFC), a global positioning system (GPS), and cellular communication (for example, long term evolution (LTE), LTE-advanced (LTE-A), code division multiple access (CDMA), wideband CDMA (WCDMA), universal mobile telecommunications system (UMTS), wireless broadband (WiBro) or global system for mobile communication (GSM)). The wired communication may include at least one of, for example, a universal serial bus (USB), a high definition multimedia interface (HDMI), recommended standard 232 (RS-232), and a plain old telephone service (POTS).

According to an embodiment of the present disclosure, the server 106 supports driving of the electronic device 100 by performing at least one operation or function implemented by the electronic device 100. For example, the server 106 may include a communication control server module that supports the communication interface 170 implemented in the electronic device 100. The communication control server module may also include at least one of the components of the communication interface 170 to perform on behalf of at least one of operations performed by the communication interface 170.

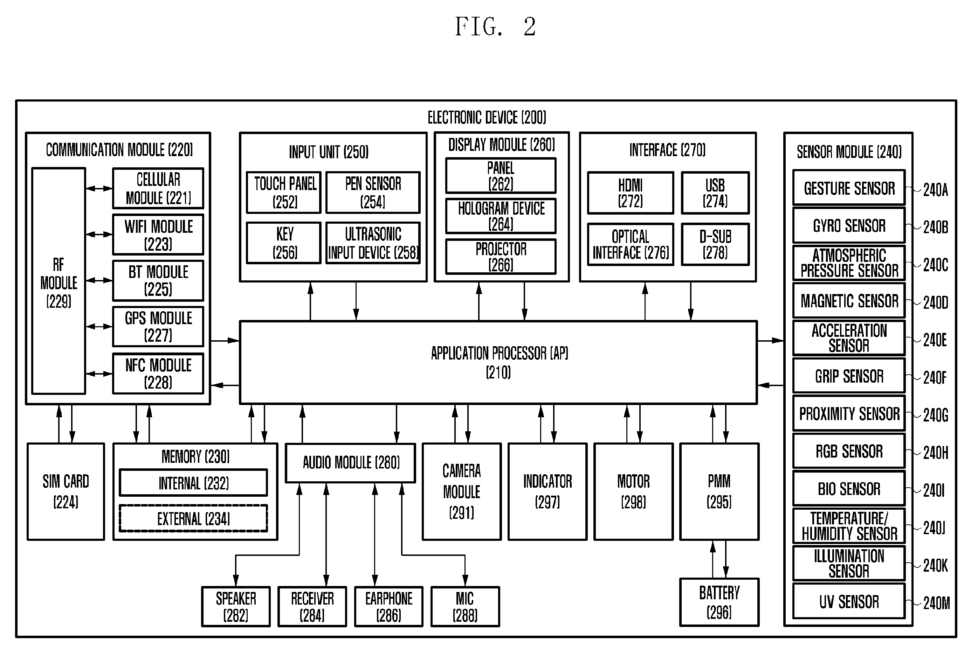

FIG. 2 is a block diagram illustrating an electronic device according to various embodiments of the present disclosure.

Referring to FIG. 2, an electronic device 200 includes one or more application processors (APs) 210, a communication module 220, a subscriber identification module (SIM) card 224, a memory 230, a sensor module 240, an input unit 250, a display module 260, an interface 270, an audio module 280, a camera module 291, a power managing module (PMM) 295, a battery 296, an indicator 297, and a motor 298. The electronic device 200 may configure, for example, an entire electronic device 100 illustrated in FIG. 1, or may selectively configure one or more parts of the electronic device 100 illustrated in FIG. 1.

The AP 210 operates an operating system (OS) or an application program so as to control a plurality of hardware or software component elements connected to the AP 210 and execute various data processing and calculations including multimedia data. The AP 210 may be implemented by, for example, a system on chip (SoC). According to an embodiment of the present disclosure, the processor 210 may further include a graphic processing unit (GPU).

The communication module 220 (for example, communication interface 170) transmits/receives data in communication between different electronic devices (for example, the electronic device 104 and the server 106) connected to the electronic device 200 (for example, electronic device 100) through a network. According to an embodiment of the present disclosure, the communication module 220 includes a cellular module 221, a Wi-Fi module 223, a BT module 225, a GPS module 227, a NFC module 228, and a radio frequency (RF) module 229.

The cellular module 221 provides a voice service, a call service, a video call service, a short message service (SMS), and/or an Internet service through a communication network (for example, LTE, LTE-A, CDMA, WCDMA, UMTS, WiBro, GSM or the like). Further, the cellular module 221 may distinguish and authenticate electronic devices within a communication network by using a subscriber identification module (for example, the SIM card 224). According to an embodiment of the present disclosure, the cellular module 221 performs at least some of the functions which can be provided by the AP 210. For example, the cellular module 221 may perform at least some of the multimedia control functions.

According to an embodiment of the present disclosure, the cellular module 221 may include a communication processor (CP). Further, the cellular module 221 may be implemented by, for example, an SoC.

According to an embodiment of the present disclosure, the AP 210 and/or the cellular module 221 (for example, a CP) may load a command or data received from at least one of a non-volatile memory and other components connected to each of the AP 210 and the cellular module 221 to a volatile memory and process the loaded command or data. Further, the AP 210 and/or the cellular module 221 may store data received from at least one of other components or generated by at least one of other components in a non-volatile memory.

Each of the Wi-Fi module 223, the BT module 225, the GPS module 227, and the NFC module 228 may include, for example, a processor for processing data transmitted/received through the corresponding module. Although the cellular module 221, the Wi-Fi module 223, the BT module 225, the GPS module 227, and the NFC module 228 are illustrated as blocks separate from each other, at least some (for example, two or more) of the cellular module 221, the Wi-Fi module 223, the BT module 225, the GPS module 227, and the NFC module 228 may be included in one integrated chip (IC) or one IC package according to one embodiment of the present disclosure. For example, at least some (for example, the CP corresponding to the cellular module 221 and the Wi-Fi processor corresponding to the Wi-Fi module 223) of the processors corresponding to the cellular module 221, the Wi-Fi module 223, the BT module 225, the GPS module 227, and the NFC module 228 may be implemented by a single SoC.

The RF module 229 transmits/receives data, for example, an RF signal. Although not illustrated, the RF module 229 may include, for example, a transceiver, a power amp module (PAM), a frequency filter, a low noise amplifier (LNA) or the like. Further, the RF module 229 may further include a component for transmitting/receiving electronic waves over a free air space in wireless communication, for example, a conductor, a conducting wire, or the like. Although the cellular module 221, the Wi-Fi module 223, the BT module 225, the GPS module 227, and the NFC module 228 share one RF module 229 in FIG. 2, at least one of the cellular module 221, the Wi-Fi module 223, the BT module 225, the GPS module 227, and the NFC module 228 may transmit/receive an RF signal through a separate RF module according to one embodiment of the present disclosure.

The SIM card 224 is a card including a SIM and may be inserted into a slot formed in a particular portion of the electronic device. The SIM card 224 includes unique identification information (for example, integrated circuit card identifier (ICCID)) or subscriber information (for example, international mobile subscriber identity (IMSI).

The memory 230 (for example, the memory 130) may include an internal memory 232 and/or an external memory 234. The internal memory 232 may include, for example, at least one of a volatile memory (for example, a random access memory (RAM), a dynamic RAM (DRAM), a static RAM (SRAM), a synchronous dynamic RAM (SDRAM), and the like), and a non-volatile memory (for example, a read only memory (ROM), a one-time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to an embodiment of the present disclosure, the internal memory 232 may be a solid state drive (SSD). The external memory 234 may further include a flash drive, for example, a compact flash (CF), a secure digital (SD), a micro-SD, a mini-SD, an extreme digital (xD), or a memory stick. The external memory 234 may be functionally connected to the electronic device 200 through various interfaces. According to an embodiment of the present disclosure, the electronic device 200 may further include a storage device or storage medium such as a hard drive.

The sensor module 240 measures a physical quantity or detects an operation state of the electronic device 200, and converts the measured or detected information into an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor (for example, a red, green, and blue (RGB) sensor) 240H, a biometric sensor 240I, a temperature/humidity sensor 240J, an illumination (light) sensor 240K, and a ultra violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an infrared (IR) sensor, an iris sensor, a fingerprint sensor (not illustrated), and the like. The sensor module 240 may further include a control circuit for controlling one or more sensors included in the sensor module 240.

The input unit 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as direct touch. The touch panel 252 may further include a tactile layer. In this event, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone (for example, microphone 288) of the electronic device 200 through an input means generating an ultrasonic signal to identify data and can perform wireless recognition. According to an embodiment of the present disclosure, the electronic device 200 receives a user input from an external device (for example, computer or server) connected to the electronic device 200 by using the communication module 220.

The display module 260 (for example, display 160) includes a panel 262, a hologram device 264, and a projector 266. The panel 262 may be, for example, a liquid crystal display (LCD) or an active matrix organic light emitting diode (AM-OLED). The panel 262 may be implemented to be, for example, flexible, transparent, impact-resistant, and/or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 200. According to an embodiment of the present disclosure, the display module 260 may further include a control circuit for controlling the panel 262, the hologram device 264, and the projector 266. To simplify the following discussion, the display module 260 and any construction thereof will be referred to as simply the display 260.

The interface 270 includes, for example, a HDMI interface 272, a USB interface 274, an optical interface 276, and a D-subminiature (D-sub) interface 278. The interface 270 may be included in, for example, the communication interface 170 illustrated in FIG. 1. Additionally or alternatively, the interface 270 may include, for example, a mobile high-definition link (MHL) interface, a secure digital (SD) card/multi-media card (MMC), or an IR data association (IrDA) standard interface.

The audio module 280 bi-directionally converts a sound and an electronic signal. At least some components of the audio module 280 may be included in, for example, the input/output interface 150 illustrated in FIG. 1. The audio module 280 processes sound information input or output through, for example, a speaker 282, a receiver 284, an earphone 286, the microphone 288 or the like.

The camera module 291 is a device which can photograph a still image and/or a video. According to an embodiment of the present disclosure, the camera module 291 may include one or more image sensors (for example, a front sensor and/or a back sensor), an image signal processor (ISP) (not shown) or a flash (for example, an LED or xenon lamp).

The power managing module 295 manages power of the electronic device 200. Although not illustrated, the power managing module 295 may include, for example, a power management integrated circuit (PMIC), a charger integrated circuit (IC), or a battery or fuel gauge.

The PMIC may be mounted to, for example, an integrated circuit or an SoC semiconductor. A charging method may be divided into wired and wireless methods. The charger IC charges a battery and prevents over voltage or over current from flowing from a charger. According to an embodiment of the present disclosure, the charger IC includes a charger IC for at least one of the wired charging method and the wireless charging method. The wireless charging method may include, for example, a magnetic resonance method, a magnetic induction method, an acoustic wave method and an electromagnetic wave method, and additional circuits for wireless charging, for example, circuits such as a coil loop, a resonant circuit, a rectifier or the like may be added.

The battery fuel gauge measures, for example, a remaining quantity of the battery 296, or a voltage, a current, or a temperature during charging. The battery 296 may store or generate electricity and supply power to the electronic device 200 by using the stored or generated electricity. The battery 296 may include a rechargeable battery and/or a solar battery. The indicator 297 shows a particular status of the electronic device 200 or a part (for example, AP 210) of the electronic device 200, for example, a booting status, a message status, a charging status and the like. The motor 298 converts an electrical signal into a mechanical vibration.

Although not illustrated, the electronic device 200 may include a processing unit (for example, GPU) for supporting a module TV. The processing unit for supporting the mobile TV may process, for example, media data according to a digital multimedia broadcasting (DMB) standard, digital video broadcasting (DVB) standard, media flow standard or the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, wherein one or more of the components may be omitted, or additional components may be further included. Also, some of the components of the electronic device according to various embodiments of the present disclosure may be combined to form a single entity, and thus may equivalently execute functions of the corresponding components before being combined.

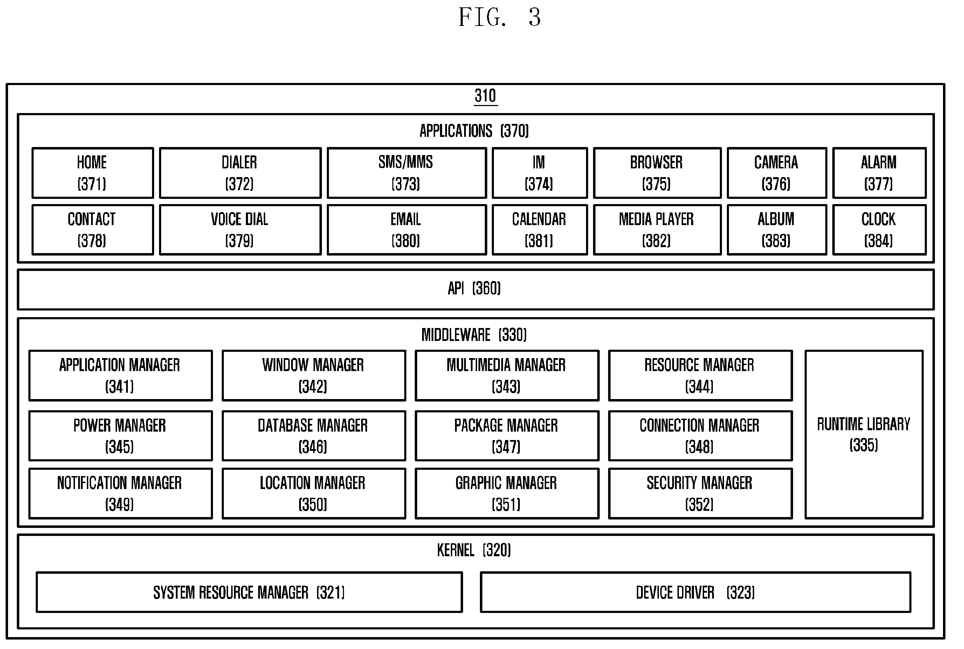

FIG. 3 is a block diagram illustrating a programming module according to various embodiments of the present disclosure.

A programming module 310 (for example, programming module 140) may be included (stored) in the electronic device 100 (for example, the memory 130) illustrated in FIG. 1. At least some of the programming module 310 may be formed of software, firmware, hardware, or a combination of at least two of software, firmware, and hardware. The programming module 310 may be executed in the hardware (for example, electronic device 200) to include an operating system (OS) for controlling resources related to the electronic device (for example, electronic device 100) or various applications (for example, applications 370) driving on the OS. For example, the OS may be Android^{™}, iOS^{™}, Windows^{™}, Symbian^{™}, Tizen^{™}, Bada OS^{™} or the like.

Referring to FIG. 3, the programming module 310 includes a kernel 320, middleware 330, an API 360, and applications 370.

The kernel 320 (for example, kernel 141) includes a system resource manager 321 and a device driver 323. The system resource manager 321 may include, for example, a process manager, a memory manager, and a file system manager. The system resource manager 321 performs a system resource control, allocation, and recall. The device driver 323 may include, for example, a display driver, a camera driver, a Bluetooth driver, a shared memory driver, a USB driver, a keypad driver, a Wi-Fi driver, and an audio driver. Further, according to an embodiment of the present disclosure, the device driver 323 may include an inter-process communication (IPC) driver.

The middleware 330 includes a plurality of modules prepared in advance to provide a function required in common by the applications 370. Further, the middleware 330 provides a function through the API 360 to allow the applications 370 to efficiently use limited system resources within the electronic device. For example, as illustrated in FIG. 3, the middleware 330 (for example, middleware 143) includes at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.The runtime library 335 includes, for example, a library module used by a compiler to add new functions through a programming language while the applications 370 are executed. According to an embodiment of the present disclosure, the runtime library 335 executes input and output, management of a memory, a function associated with an arithmetic function and the like.

The application manager 341 manages, for example, a life cycle of at least one of the applications 370. The window manager 342 manages GUI resources used on the screen. The multimedia manager 343 detects a format required for reproducing various media files and performs an encoding or a decoding of a media file by using a codec suitable for the corresponding format. The resource manager 344 manages resources such as a source code, a memory, or a storage space of at least one of the applications 370.

The power manager 345 operates together with a Basic input/output system (BIOS) to manage a battery or power and provides power information required for the operation. The database manager 346 manages generation, search, and change of a database to be used by at least one of the applications 370. The package manager 347 manages an installation or an update of an application distributed in a form of a package file.

The connection manager 348 manages, for example, a wireless connection such as Wi-Fi or BT. The notification manager 349 displays or notifies a user of an event such as an arrival message, an appointment, a proximity alarm or the like, in a manner that does not disturb the user. The location manager 350 manages location information of the electronic device. The graphic manager 351 manages a graphic effect provided to the user or a user interface related to the graphic effect. The security manager 352 provides a general security function required for a system security or a user authentication. According to an embodiment of the present disclosure, when the electronic device (for example, electronic device 100 or 200) has a call function, the middleware 330 may further include a telephony manager for managing a voice of the electronic device or a video call function. The middleware 330 may generate a new middleware module through a combination of various functions of the aforementioned internal component modules and use the generated new middleware module. The middleware 330 may provide a module specified for each type of operating system to provide a differentiated function. Further, the middleware 330 may dynamically delete some components or add new components. Accordingly, some of the components described in the embodiment of the present disclosure may be omitted, replaced with other components having different names but performing similar functions, or other components may be further included.

The API 360 (for example, API 145) is a set of API programming functions, and may be provided with a different configuration according to an operating system. For example, in Android or iOS, a single API set may be provided for each platform. In Tizen, two or more API sets may be provided.

The applications 370, which may include an application similar to the application 147, may include, for example, a preloaded application and/or a third party application. The applications 370 may include a home application 371, a dialer application 372, an SMS/MMS application 373, an instant messaging (IM) application 374, a browser application 375, a camera application 376, an alarm application 377, a contact application 378, a voice dial application 379, an email application 380, a calendar application 381, a media player application 382, an album application 383, and a clock application 384. However, the present embodiment of the present disclosure is not limited thereto, and the applications 370 may include any other similar and/or suitable application.

At least a part of the programming module 310 can be implemented by commands stored in computer-readable storage media. When the commands are executed by at least one processor, the AP 210 for example, at least one processor can perform functions corresponding to the commands. The computer-readable storage media may be, for example, the memory 230. At least a part of the programming module 310 can be implemented, that is, executed, by, for example, the AP 210. At least a part of the programming module 310 may include, for example, a module, a program, a routine, a set of instructions and/or a process for performing at least one function.

The titles of the aforementioned elements of the programming module, for example, the programming module 310, according to the present disclosure may vary depending on the type of the OS. The programming module according to the present disclosure may include at least one of the aforementioned elements and/or may further include other additional elements, and/or some of the aforementioned elements may be omitted. The operations performed by a programming module and/or other elements according to the present disclosure may be processed through a sequential, parallel, repetitive, and/or heuristic method, and some of the operations may be omitted and/or other operations may be added.

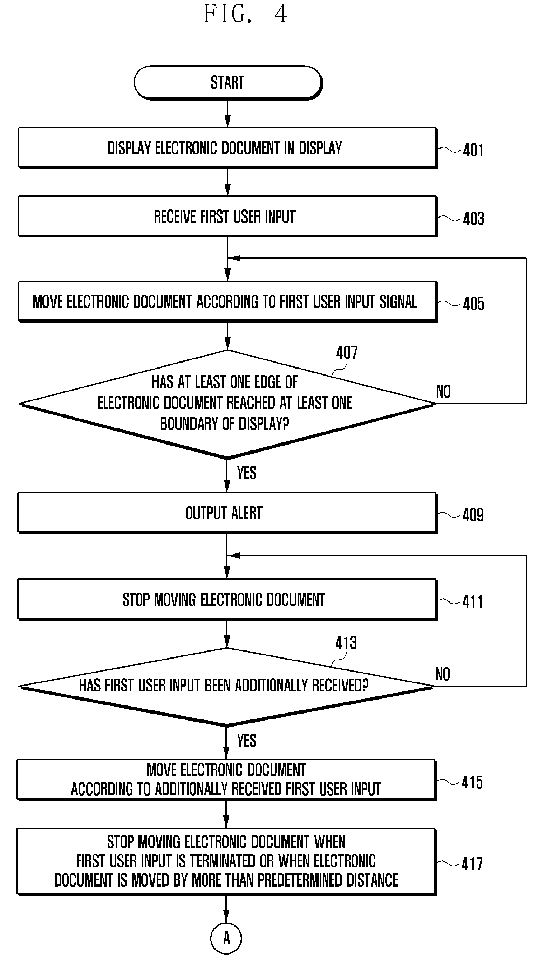

FIG. 4 is a flowchart illustrating a method for displaying an electronic document by an electronic device according to various embodiments of the present disclosure.

Referring to FIG. 4, in operation 401, the electronic device 200 may display an electronic document in the display 260.

An electronic document according to various embodiments of the present disclosure refers to a transmitted or received document, a stored document or a digital image type which is generated in an electronic form. A digital image may include at least one of text and an image.

The electronic document may be generated using spreadsheets, graphic software, or the like, which are included in the electronic device 200, or may be received through an external electronic device (for example, electronic devices 102 and 104). Further, the electronic document may be acquired through the camera module 291 included in the electronic device 200, or may be received through the external electronic device (for example, the electronic devices 102 and 104). Also, the electronic document may be a web document or a web page such as an HTML page received through the external electronic device (for example, the electronic devices 102 and 104).

The electronic device 200 can display a resolution of the electronic document by resizing the resolution of the electronic document in accordance with a resolution of the display 260 when the resolution of the electronic document is larger or smaller than the resolution of one axis corresponding to one of the horizontal and vertical resolutions of the display 260.

The electronic device 200 can display the resolution of the electronic document as it is in the display 260. In this case, a part of the electronic document may be displayed on the display 260 but not the entire electronic document. Further, even in the case of resizing the resolution of the electronic document in accordance with the resolution of the display 260, if the electronic device 200 resizes the electronic document in accordance with the horizontal or vertical resolutions of the display 260, only a part of the electronic document may be displayed and not the entire electronic document.

The electronic document according to various embodiments of the present disclosure may include an electronic document which is larger than the screen size of the display 260, and may also include an electronic document which fits on or is smaller than the screen of the display 260.

In a case where a user views the electronic document through the electronic device 200, when a part of the electronic document is displayed in the display 260, the electronic device 200 may generate a user input to allow the user to see a remaining unviewed part of the electronic document. The electronic device 200 can receive a user input using a touch sensitive device included in the display 260, and can move the electronic document or change a display position of the electronic document according to the user input.

In operation 403, the electronic device 200 receives a first user input. As mentioned above, the electronic device 200 according to various embodiments of the present disclosure can display a part of the electronic document through the display 260. In order to view other parts of the electronic document, the user may input the first user input in the display 260, and the electronic device 200 may receive the first user input. The first user input received through the display 260 may be processed through the processor 120 or the AP 210, and the electronic document may be moved or the display location of the electronic document may be changed, according to the processed first user input.

The first user input may be a user's touch input in the display 260. The first user input may be a touch-and-drag operation or a swipe operation performed after the electronic document displayed in the display 260 is touched.

In operation 405, the electronic device 200 can move the electronic document according to the first user input. The electronic device 200 can move the display location of the electronic document in the display 260 according to the first user input. An operation of moving the electronic document according to the first user input may be an operation of scrolling the electronic document. The direction in which the electronic document moves may be the same direction of the direction of the first user input or may be the opposite of the direction of the first user input.

For example, when the user touches and drags the electronic document to a upper area of the display 260 in order to see a bottom area of the electronic document, which is not displayed in the display 260, the electronic device 200 may display the bottom area of the electronic document which is located in a direction opposite to the drag direction of the user input.

In operation 407, the electronic device 200 may determine whether at least one edge of the electronic document has reached at least one boundary of the display 260. The electronic device 200 determines whether an edge of the electronic document has reached at least one boundary of a display while scrolling or moving the electronic document according to the first user input. When the edge of the electronic document has not reached the at least one boundary of the display, the electronic device 200 may return to operation 405.

For example, when the electronic document is configured as one page, at least one edge of the electronic document may be one of the top edge area, the bottom edge area, the left edge area and the right edge area. Further, at least one boundary of the display 260 may refer to top, bottom, left and right boundary areas, or an edge area of a display formed in a rectangle shape, a square shape or a quadrangle shape.

According to various embodiments of the present disclosure, the case where at least one boundary of the electronic document reaches at least one boundary of the display 260 may refer to a case where the bottom area of the electronic document reaches the bottom boundary of the display 260 while the electronic device 200 moves the electronic document according to a user input when the user inputs the user input to the electronic device 200 in order to see the bottom area of the electronic document, which is not displayed on the display 260.

When at least one boundary of the electronic document reaches at least one boundary of the display 260 while the electronic device 200 moves the electronic document according to the first user input, the electronic device 200 can output an alert in operation 409. The alert may be at least one of a visual alert and/or an auditory alert. The visual alert may be a visual feedback informing the user that at least one edge of the electronic document has reached at least one boundary of the display 260. The visual alert may be an animation operation in which a color of a predetermined area of an edge of the electronic document, which has reached a boundary of the display 260, is specially illuminated (for example, flickers, pulses, flashes or otherwise varies), or an animation operation in which the electronic document, which has reached a boundary of the display 260, performs a bouncing motion or a damped motion on the display. The auditory alert may be an auditory alert informing the user that at least one edge of the electronic document has reached at least one boundary of the display 260. The auditory alert may be an operation of outputting a sound through the speaker 282. The sound may be a pre-stored warning sound, a bell sound, a song, or an alarm sound.

In operation 411, when at least one edge of the electronic document reaches at least one boundary of the display 260 while the electronic document is moved according to the first user input, the electronic device 200 may stop moving the electronic document. According to an embodiment of the present disclosure, stopping the moving of the electronic document may be a temporary pause of the moving of the electronic document. When moving the electronic document is stopped, the electronic document may be displayed in a form in which at least one edge of the electronic document is in contact with at least one boundary of the display 260. This may give a feeling to a user that the electronic document has been fitted to the display 260.

In operation 413, the electronic device 200 may determine whether an additional first user input has been received. In operation 411, the received additional first user input may be a consecutive input identical to the first user input before the stopping of the moving of the electronic document. The received additional first user input may be an inconsecutive input which is newly input in the same direction as that of the first user input, after the first user input generated before the stopping of the moving of the electronic document is terminated. When the electronic device 200 does not receive the additional first user input, the electronic device 200 may return to operation 411.

In operation 415, the electronic device 200 can move the electronic document according to the received additional first user input. When the electronic device 200 moves the electronic document according to the received additional first user input, at least one edge of the electronic document is spaced apart from at least one boundary of the display 260, and the electronic device 200 can display a separated area.

In operation 417, when the received additional first user input is terminated or the electronic document is moved by more than a predetermined distance from at least one boundary of the display 260 while the electronic device 200 moves the electronic document according to the received additional first user input, the electronic device 200 may stop moving the electronic document.

According to various embodiments of the present disclosure, in operation 417, when an edge of the electronic document is spaced a predetermined distance apart from at least one boundary of the display 260 while the electronic device 200 moves the electronic document according to the received additional first user input, the electronic device 200 may stop moving the electronic document even in the case of an additional first user input.

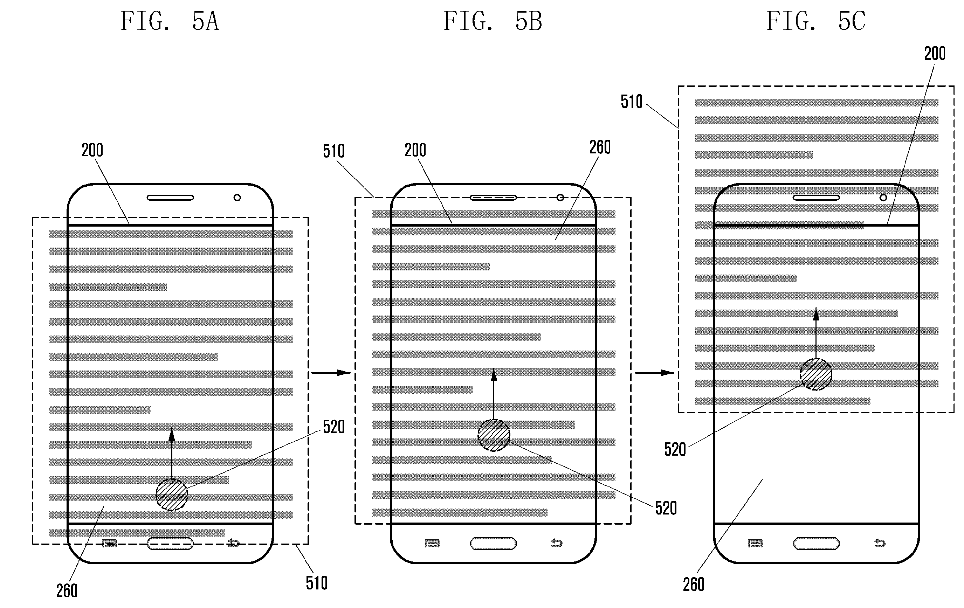

FIGS. 5A to 5F are views illustrating a method for displaying an electronic document of an electronic device according to the flowchart of FIG. 4, according to various embodiments of the present disclosure.

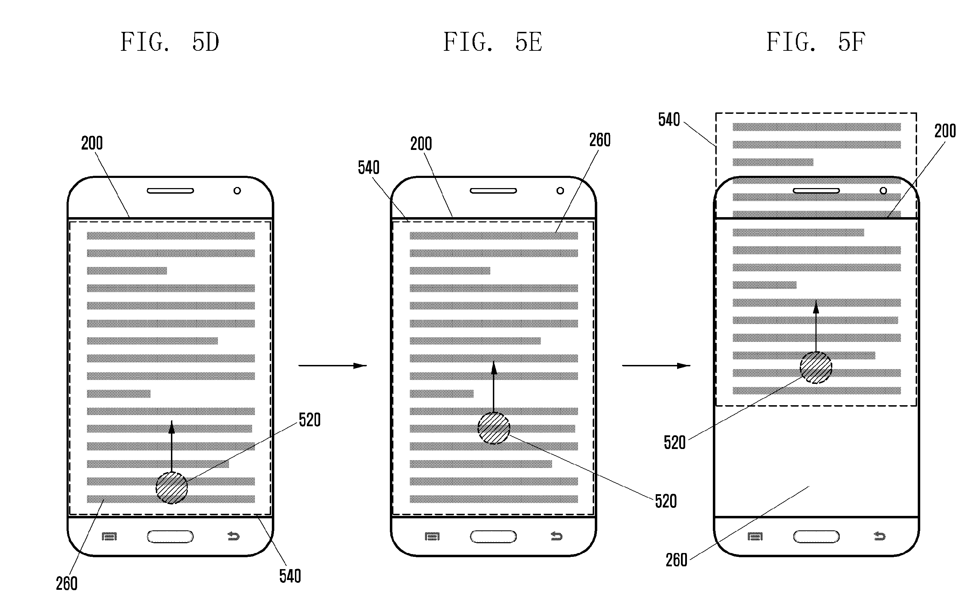

FIGS. 5A to 5C correspond to a case where an electronic document 510 is larger than a screen of the display 260, and FIGS. 5D to 5F correspond to a case where an electronic document 540 fits on or is smaller than the screen of the display 260.

Referring to FIG. 5A, the electronic device 200 can display the electronic document 510 in the display 260. In this case, the user can input a first user input 520 to the display 260 to view a bottom area of the electronic document 510.

Referring to FIG. 5B, the electronic device 200 can move the electronic document 510 according to the first user input 520, and can output an alert when at least one edge of the electronic document 510 reaches at least one boundary of the display 260.

Referring to FIG. 5C, the electronic device 200 can move the electronic document 510 according to a received additional first user input 520. When the electronic device 200 moves the electronic document 510 according to the received additional first user input 520, at least one edge of the electronic document 510 is spaced apart from at least one boundary of the display 260, and the electronic device 200 can display a separated area.

Referring to FIG. 5D, the electronic device 200 can display the electronic document 540 in the display 260. In this case, the user can input the first user input 520 to the display 260 in order to view the bottom area of the electronic document 540.

Referring to FIG. 5E, the electronic device 200 can move the electronic document 540 according to the first user input 520, and can output an alert when at least one edge of the electronic document 540 reaches at least one boundary of the display 260.

Referring to FIG. 5F, the electronic device 200 can move the electronic document 540 according to the received additional first user input 520. When the electronic device 200 moves the electronic document 540 according to the received additional first user input 520, at least one edge of the electronic document 540 is spaced apart from at least one boundary of the display 260, and the electronic device 200 can display a separated area.

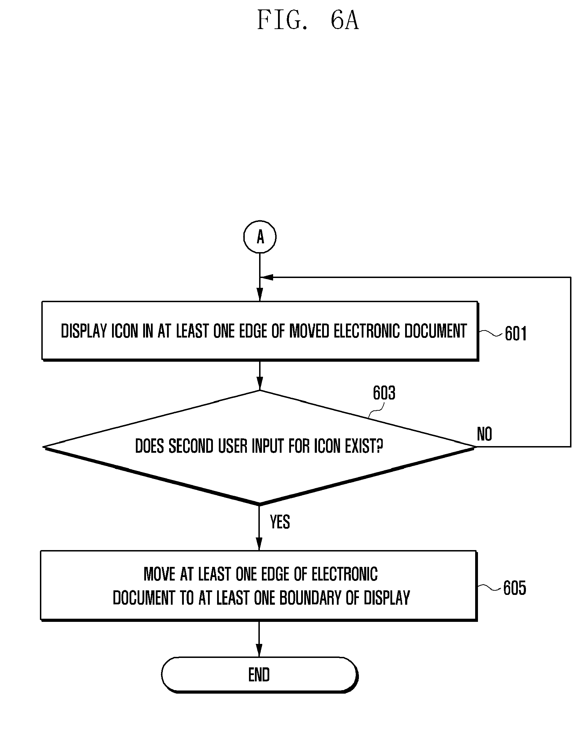

FIGS. 6A to 6C are flowcharts illustrating a method for displaying an electronic document by an electronic device according to various embodiments of the present disclosure.

Referring to FIG. 6A, the electronic device 200 can display an icon in at least one edge of an electronic document moved according to the received additional first user input in operation 601 after operation 417. The operations of FIGS. 6A to 6C may follow the operation 417 of FIG. 4.

The icon displayed in at least one edge of the moved electronic document may be an indicator indicating that the electronic document has been spaced apart from the boundary of the display 260, or may be an indicator for informing a user that the user can restore, to the original state, the electronic document in an opposite direction of a moving direction of the electronic document.

In operation 603, the electronic device 200 may determine whether a second user input for the icon has been received. The second user input may be an operation in which a user touches or pushes an icon. When the second user input for the icon does not exist, the electronic device 200 returns to operation 601.

When the second user input for the icon is received, the electronic device 200 can move at least one edge of an electronic document to at least one boundary of the display 260 in operation 605. According to an embodiment of the present disclosure, when the second user input for the icon is received, the electronic device 200 can restore, to the original state, an edge of the electronic document spaced apart from a boundary of the display 260, thereby displaying the electronic document in a form in which the edge of the electronic document is in contact with the boundary of the display 260.

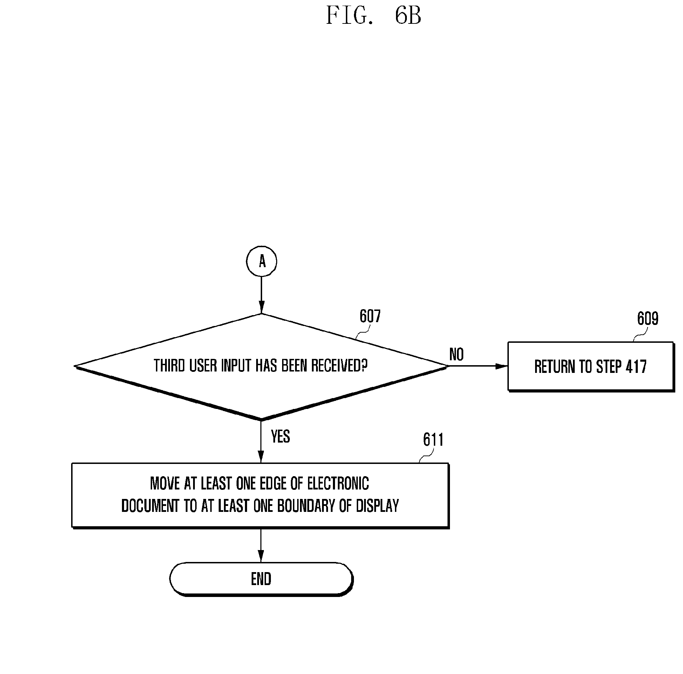

Referring to FIG. 6B, the electronic device 200 may determine whether the electronic device 200 has received a third user input in operation 607 after operation 417. The third user input may be an input signal which is in the opposite direction to the direction of the first user input, and, for example, may be a swipe input or a touch-and-drag input which is in the opposite direction of the direction of the first user input. When the electronic device 200 does not receive the third user input, the electronic device 200 may proceed to operation 609. Operation 609 is an operation which returns to operation 417.

When the electronic device 200 receives the third user input, the electronic device 200 can move at least one edge of an electronic document to at least one edge of the display 260 in operation 611. According to an embodiment of the present disclosure, when the third user input is received, the electronic device 200 may restore, to the original state, an edge of an electronic document spaced apart from the boundary of the display 260, and then display the electronic document in the form in which the edge of the electronic document is in contact with the boundary of the display 260.

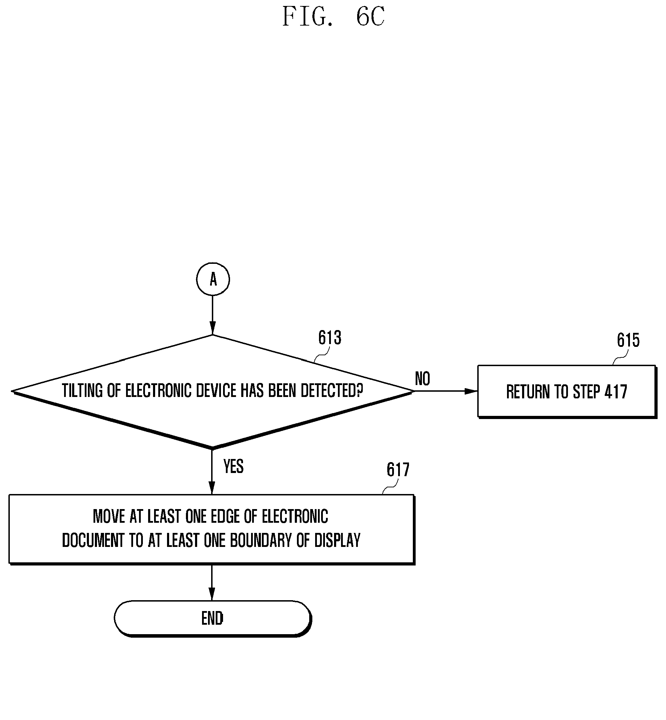

Referring to FIG. 6C, the electronic device 200 can detect tilting of the electronic device 200 in operation 613 after operation 417. The electronic device 200 can detect the tilting of the electronic device 200 using at least one of the gyro sensor 240B and acceleration sensor 240E which are included in the sensor module 240. The electronic device 200 may proceed to operation 615 when the electronic device 200 does not detect tilting of an electronic device. Operation 615 is an operation which returns to operation 417.

When the electronic device 200 detects the tilting of the electronic device, the electronic device 200 can move at least one edge of the electronic document to at least one boundary of a display 260 in operation 617. According to an embodiment of the present disclosure, when the third user input is received, the electronic device 200 may restore, to the original state, an edge of an electronic document spaced apart from the boundary of the display 260 and then display the electronic document in the form in which the edge of the electronic document is in contact with the boundary of the display 260.

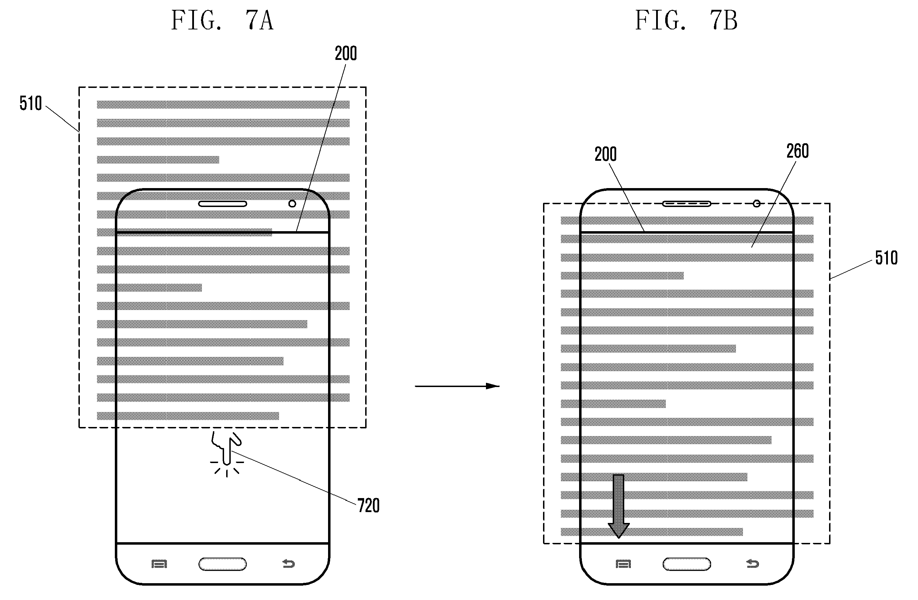

FIGS. 7A to 7H are views illustrating a method for displaying an electronic document by an electronic device according to the flowcharts of FIGS. 6A to 6C, according to various embodiments of the present disclosure.

Referring to FIG. 7A, the electronic device 200 can display an icon 720 on at least one edge of an electronic document moved according to a received additional first user input. The icon 720 displayed on the at least one edge of the moved electronic document 510 may be an indicator informing that the electronic document 510 is spaced apart from a boundary of the display 260.

The electronic device 200 may determine whether a second user input for the icon 720 has been received. The second user input may be an operation of touching or pushing the icon 720 by a user.

Referring to FIG. 7B, when the second user input for the icon 720 is received, the electronic device 200 can move at least one edge of the electronic document 510 to at least one boundary of the display 260. The electronic device 200 can restore, to the original state, an edge of the electronic document 510 spaced apart from a boundary of the display 260 and then display the electronic document 510 in a form in which the edge of the electronic document 510 is in contact with the boundary of the display 260.

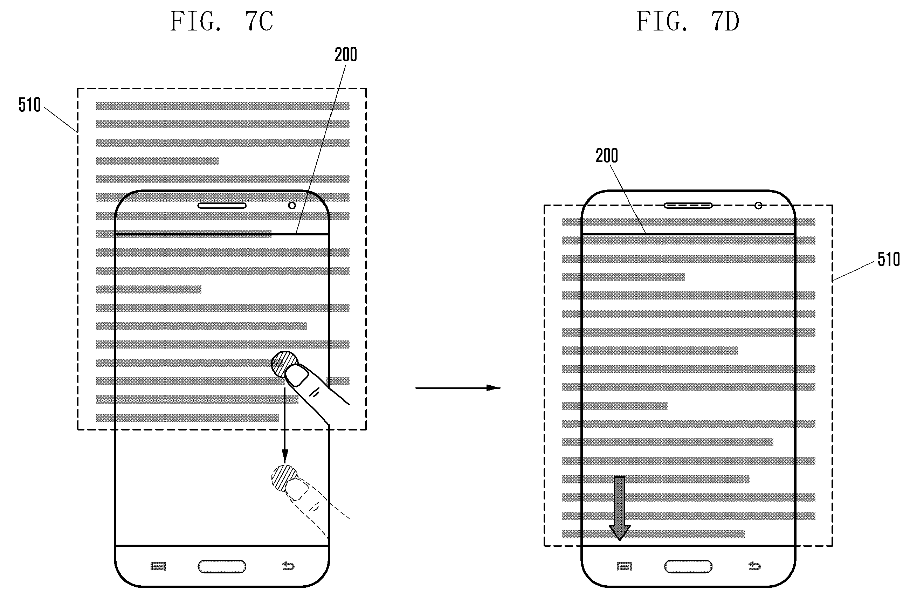

Referring to FIG. 7C, the electronic device 200 may determine whether the electronic device 200 has received a third user input. The third user input may be an input signal which is in the opposite direction of the first user input, and may be, for example, a swipe input or a touch-and-drag input which is in the opposite direction of the first user input.

Referring to FIG. 7D, when the electronic device 200 receives the third user input, the electronic device 200 can move at least one edge of the electronic document 510 to at least one boundary of the display.

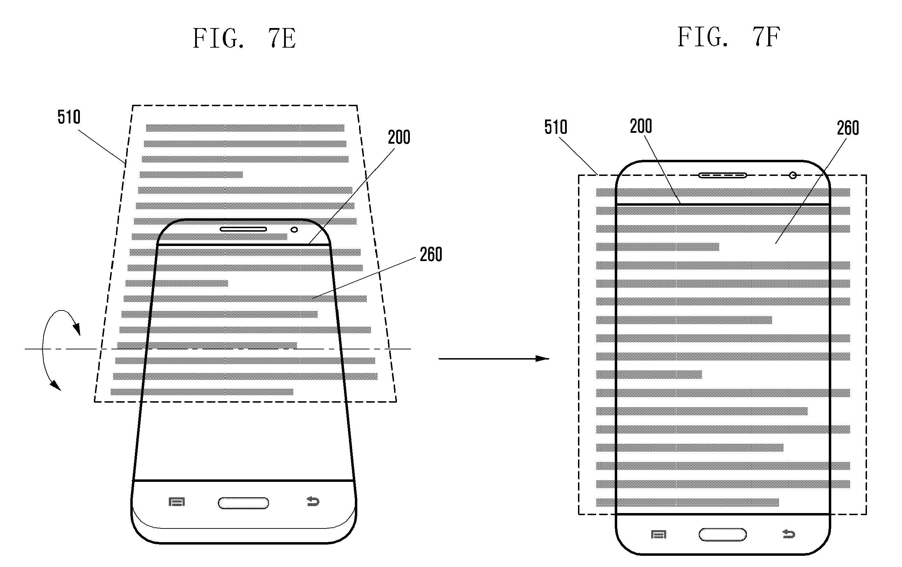

Referring to FIG. 7E, the electronic device 200 can detect tilting of the electronic device 200. When the electronic device 200 detects tilting of an electronic device, the electronic device 200 can move at least one edge of the electronic document 510 to at least one boundary of the display 260 as shown in FIG. 7F.

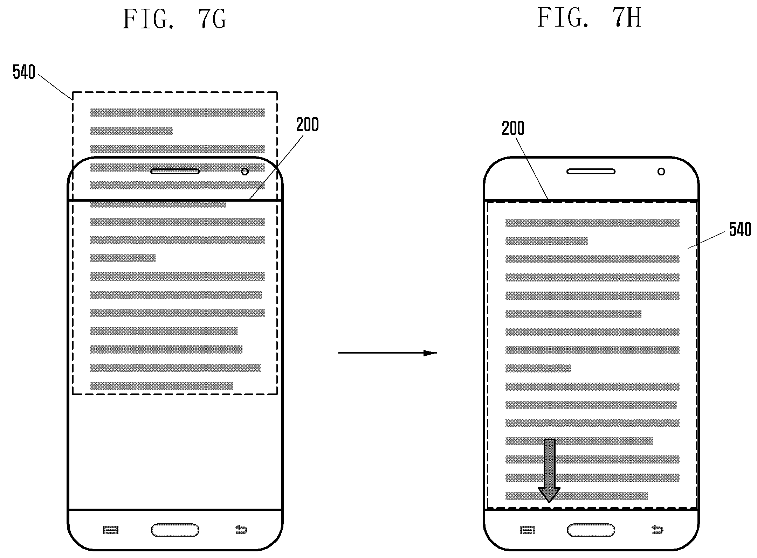

FIGS. 7G and 7H are views illustrating a case where the operations are substantially the same to the operations of FIGS. 7A to 7F and an electronic document 540 fits on or is smaller than a screen of the display 260.

Referring to FIGS. 7G and 7H, the electronic device 200 may display an indicator in the electronic document 540 moved according to a received additional first user input and receive a user input for the indicator. When detecting a swipe input or a touch-and-drag input in the opposite direction to that of the first user input, or tilting of the electronic device 200, the electronic device 200 may restore, to the original state, an edge of the electronic document 540 spaced apart from a boundary of the display 260 and display the electronic document 540 in a form in which the edge of the electronic document 540 is in contact with the boundary of the display 260.

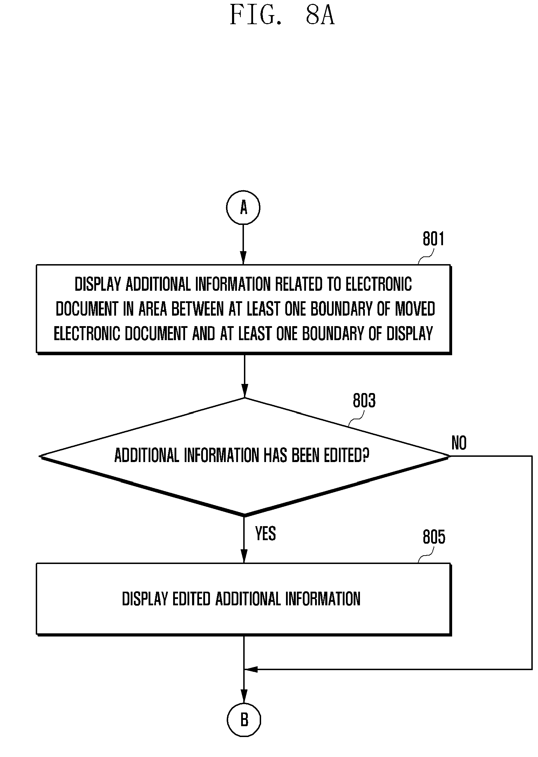

FIGS. 8A to 8D are flowcharts illustrating a method for displaying an electronic document by the electronic device according to various embodiments of the present disclosure.

Referring to FIG. 8A, the electronic device 200 can display additional information related to an electronic document in an area between at least one edge of the electronic document moved according to the received additional first user input and at least one boundary of the display 260 in operation 801 after operation 417. The operations of FIG. 8A may follow the operation 417 of FIG. 4.

The electronic device 200 can display the additional information in an area between edges of an electronic document, which are spaced apart from a boundary of the display 260, in operation 801. The additional information may be meta-data related to the electronic document. According to various embodiments of the present disclosure, the displayed additional information area (for example, an area between edges of the electronic document spaced apart from the boundary of the display 260) may be a kind of memo input field but embodiments are not limited thereto.

The electronic device 200 can display, as additional information related to an electronic document, a file name, a generation date, a file format, a resolution, a file size, a modification date, an electronic document generator, or a file generation location of the electronic document. For example, when an electronic document is a picture, displayed additional information may include picture information such as a time of photographing the picture, an exposure, a location or a place, whether a flash is used, and a picture size.

The electronic device 200 can determine whether a user input for editing the additional information is received in operation 803. When the user input for editing the additional information is received, the electronic device 200 can display the edited additional information in an additional information area (for example, an area between edges of an electronic document spaced apart from a boundary of the display 260) in operation 805. The edited additional information may be stored in the memory 230. In a state in which the edited additional information is displayed, the electronic device 200 proceeds to operation B.

When the user input for editing the additional information does not exist, the electronic device 200 maintains a state in which the additional information is displayed, and proceeds to operation B. Since the operations provide a process of editing additional information, the various embodiments of the present disclosure may allow a user to directly enter an edit mode in order to modify/edit the additional information when the user selects one (using for example, a single touch or a double touch) of a plurality of additional information fields. In this case, when the user enters the edit mode, a virtual keyboard may be popped up automatically. When the user modifies or edits the additional information and then selects a save button or a confirm button in order to save the above-mentioned edited content, the above-mentioned editing process may be finalized.

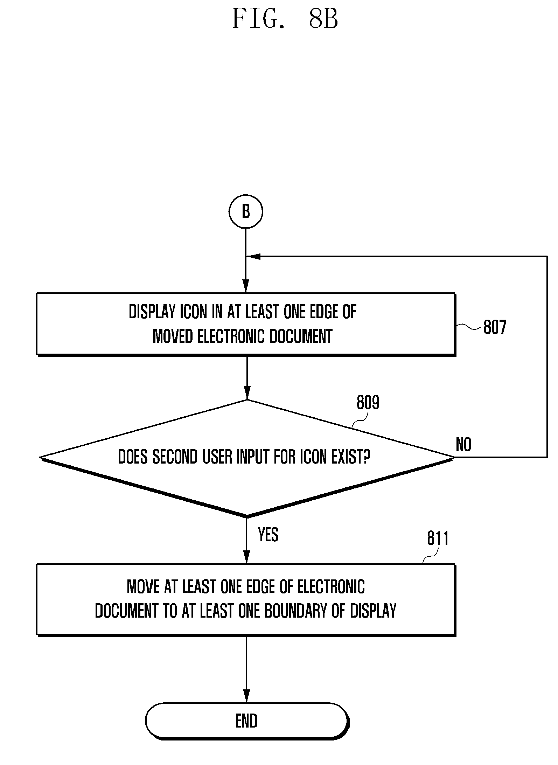

Referring to FIG. 8B, the electronic device 200 can additionally display an icon in at least one edge of an electronic document moved according to a received additional first user input in operation 807 after operation B. The icon displayed in the at least one edge of the moved electronic document may be an indicator informing that the electronic document is spaced apart from a boundary of the display 260.

The electronic device 200 can determine whether a second user input for an icon has been received in operation 809. The second user input may be an operation of touching or pushing the icon by a user. When the second user input for the icon does not exist, the electronic device 200 returns to operation 807.

When the second user input for the icon is received, the electronic device 200 can move at least one edge of an electronic document to at least one boundary of the display 260 in operation 811.

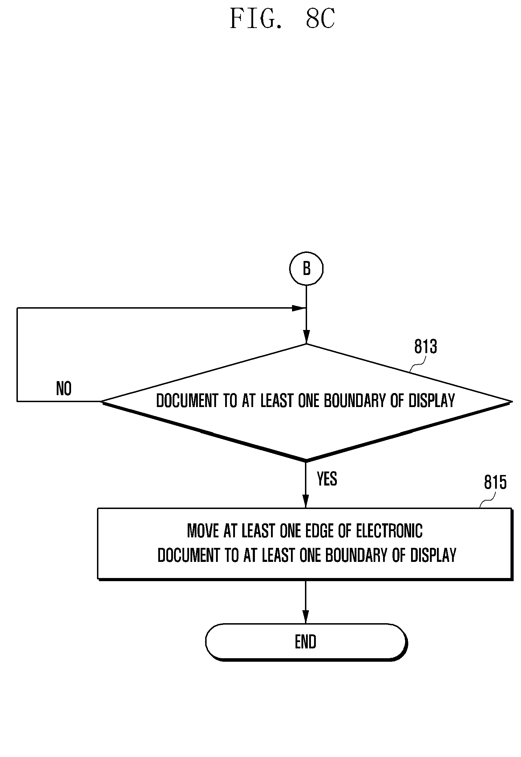

Referring to FIG. 8C, the electronic device 200 can determine whether the electronic device 200 has received a third user input in operation 813 after operation B. The third user input may be an input signal which is in the opposite direction of the first user input, and, for example, may be a swipe input or a touch-and-drag input which is in the opposite direction of the first user input. When the electronic device 200 does not receive the third user input, the electronic device 200 may repeat operation 813. When the electronic device 200 receives the third user input, the electronic device 200 can move at least one edge of an electronic document to at least one boundary of the display in operation 815.

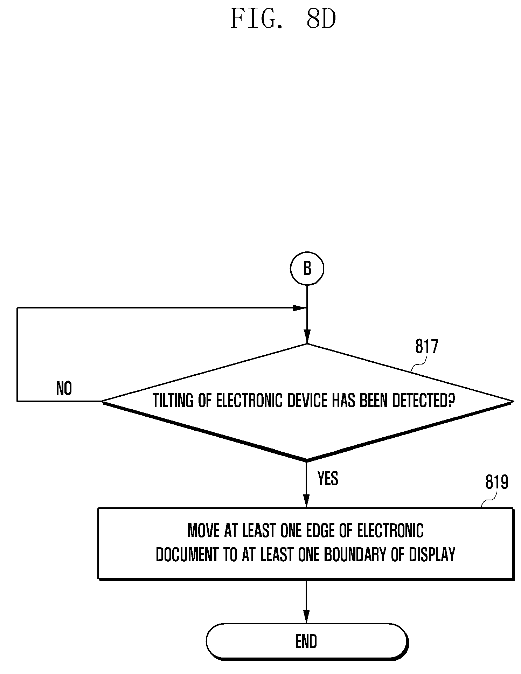

Referring to FIG. 8D, the electronic device 200 can detect tilting of the electronic device 200 in operation 817 after operation B. The electronic device 200 can detect the tilting of the electronic device 200 using at least one of the gyro sensor 240B and the acceleration sensor 240E which are included in the sensor module 240. The electronic device 200 may repeat operation 817 when the electronic device 200 does not detect the tilting of the electronic device. When the electronic device 200 detects the tilting of the electronic device, the electronic device 200 can move at least one edge of the electronic document to at least one boundary of the display 260 in operation 819.

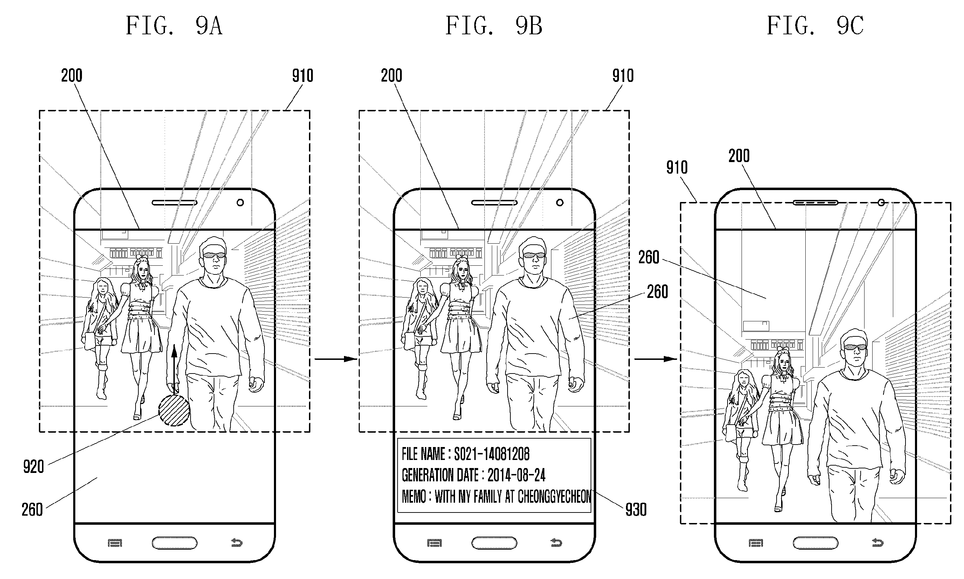

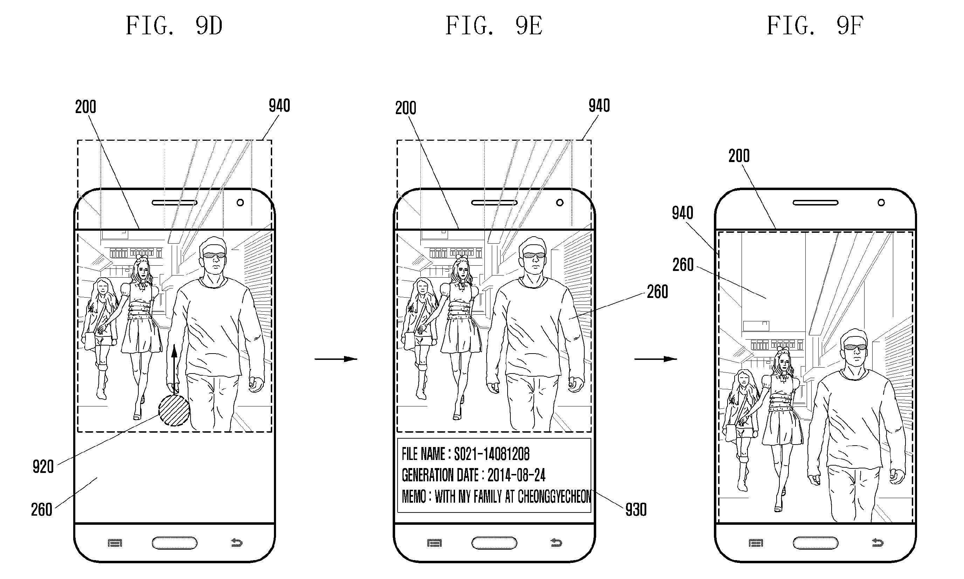

FIGS. 9A to 9F are views illustrating a method for displaying an electronic document by an electronic device according to the flowcharts of FIGS. 8A to 8D, according to various embodiments of the present disclosure.

Referring to FIG. 9A, the electronic device 200 can move an electronic document 910 according to a received additional first user input 920. When the electronic device 200 moves the electronic document 910 according to the received additional first user input 920, at least one edge of the electronic document 910 is spaced apart from at least one boundary of the display 260, and the electronic device 200 can display a separated area.

Referring to FIG. 9B, the electronic device 200 can display additional information related to the electronic document 910 in an area between at least one edge of the electronic document 910 moved according to the received additional first user input and at least one boundary of the display 260. An additional information area 930 can display additional information related to the electronic document 910.

According to various embodiments of the present disclosure, the displayed additional information area 930 (for example, an area between edges of the electronic document spaced apart from the boundary of the display 260) may be a kind of memo input field but embodiments are not limited thereto.

The additional information may be meta-data related to the electronic document. The electronic device 200 can display, as additional information related to an electronic document, a file name, a generation date, a file format, a resolution, a file size, a modification date, an electronic document generator, or a file generation location of the electronic document.

For example, when an electronic document is a picture, the displayed additional information may include picture information such as a time of photographing the picture, an exposure, a location or a place, whether a flash is used, and a picture size.

Additional information displayed in the additional information area 930 may be edited by a user.

Referring to FIG. 9C, when the electronic device 200 receives the second user input for an icon displayed in at least one edge of the electronic document 910, detects tilting of the electronic device 200, and/or receives the third user input, the electronic device 200 can move at least one edge of the electronic document 910 to at least one boundary of the display 260. Since the operations provide for a process of editing the additional information, various embodiments of the present disclosure may allow a user to modify/edit the additional information by directly entering an edit mode when the user selects one (using for example, a single touch or a double touch) of a plurality of additional information fields. In this case, when the user enters the edit mode, a virtual keyboard may be popped up automatically. When the user modifies or edits the additional information and then selects a save button or a confirm button in order to save the above-mentioned edited content, the above-mentioned editing process may be finalized.

The operations of FIGS. 9D to 9F are substantially the same to the operations of FIGS. 9A to 9C, and correspond to a case where an electronic document 940 fits on or is smaller than a screen of the display 260.

Referring to FIGS. 9D to 9F, the electronic device 200 can display additional information related to the electronic document 940 in an area between at least one edge of the electronic document 940 moved according to the received additional first user input and at least one boundary of the display 260. Further, when the electronic device 200 receives the second user input for an icon displayed in at least one edge of the electronic document 940, detects tilting of the electronic device 200, and/or receives the third user input, the electronic device 200 can move at least one edge of the electronic document 940 to at least one boundary of the display 260.

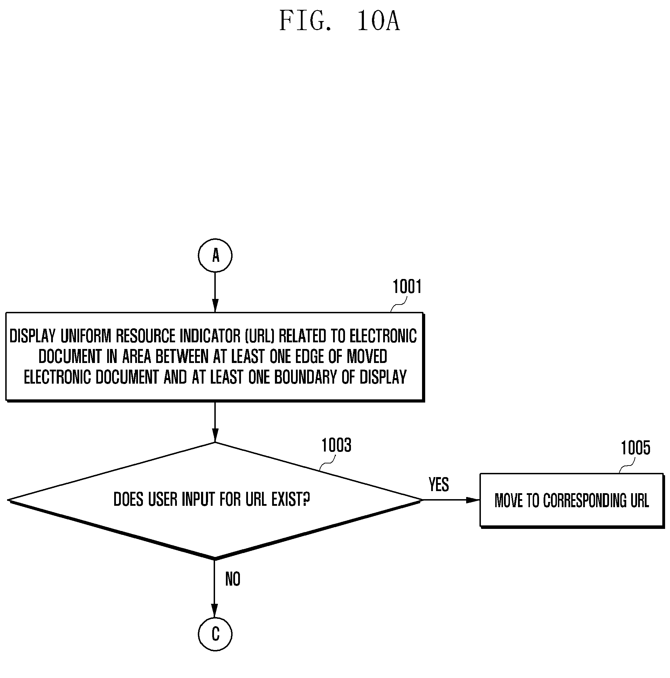

FIGS. 10A to 10D are flowcharts illustrating a method for displaying an electronic document by an electronic device according to various embodiments of the present disclosure.

Referring to FIG. 10A, the electronic device 200 can display a uniform resource locator (URL) related to an electronic document in an area between at least one edge of the electronic document moved according to the received additional first user input and at least one boundary of the display 260 in operation 1001 after operation 417. The operations of FIG. 10A may follow the operation 417 of FIG. 4.

A URL related to an electronic document may also be a kind of additional information. The URL displayed in an area between at least one edge of the moved electronic document and at least one boundary of the display 260 is displayed in a link form. The URL related to an electronic document may be a recommended article related to the electronic document or an address related to a recommended website. The recommended website may be similar to a website which a user is currently viewing or the website-related information. An algorithm which recommends a website may be an algorithm which shows data corresponding to a title of an article or a web document which a user is currently viewing, or displays an article or a web document determined to be of interest to a user by qualitatively analyzing a characteristic of a webpage which the user frequently views using a heuristic algorithm.

The electronic device 200 determines whether a user input for a URL related to an electronic document is received in operation 1003. When the user input for the URL is received, the electronic device 200 can redirect the display to the corresponding URL to display a web document on the display 260 in operation 1005.

When the user input for the URL does not exist, the electronic device 200 proceeds to operation C.

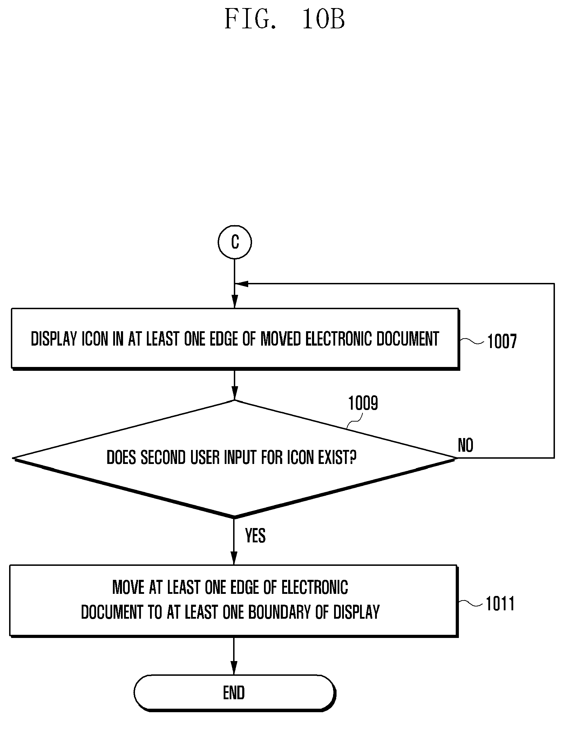

Referring to FIG. 10B, the electronic device 200 can additionally display an icon in at least one edge of an electronic document moved according to a received additional first user input in operation 1007 after operation C. An icon displayed in the at least one edge of the moved electronic document may be an indicator informing that the electronic document is spaced apart from a boundary of the display 260.

The electronic device 200 can determine whether the electronic device 200 has received a second user input for an icon in operation 1009. The second user input may be an operation of touching or pushing the icon by a user. When the second user input for the icon does not exist, the electronic device 200 returns to operation 1007.

When the second user input for the icon is received, the electronic device 200 can move at least one edge of an electronic document to at least one boundary of the display 260 in operation 1011.

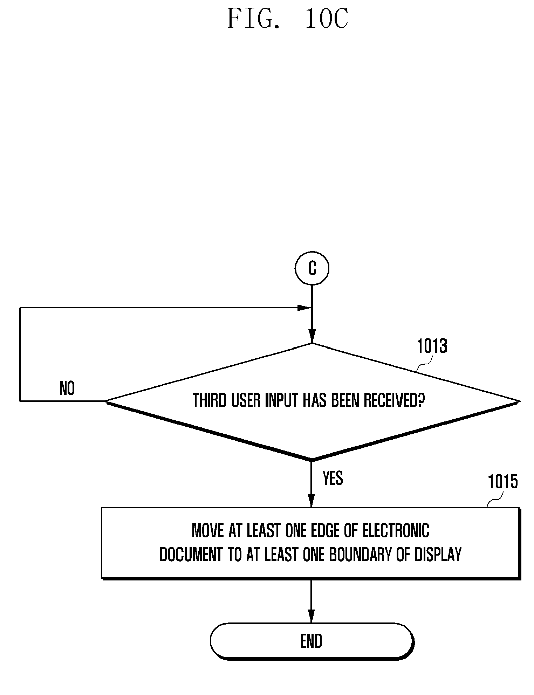

Referring to FIG. 10C, the electronic device 200 can determine whether the electronic device 200 has received a third user input in operation 1013 after operation C. The third user input may be an input signal which is in the opposite direction of the first user input, and may be, for example, a swipe input or a touch-and-drag input which is in the opposite direction of the first user input. When the electronic device 200 does not receive the third user input, the electronic device 200 may repeat operation 1013. When the electronic device 200 receives the third user input, the electronic device 200 can move at least one edge of an electronic document to at least one boundary of the display in operation 1015.

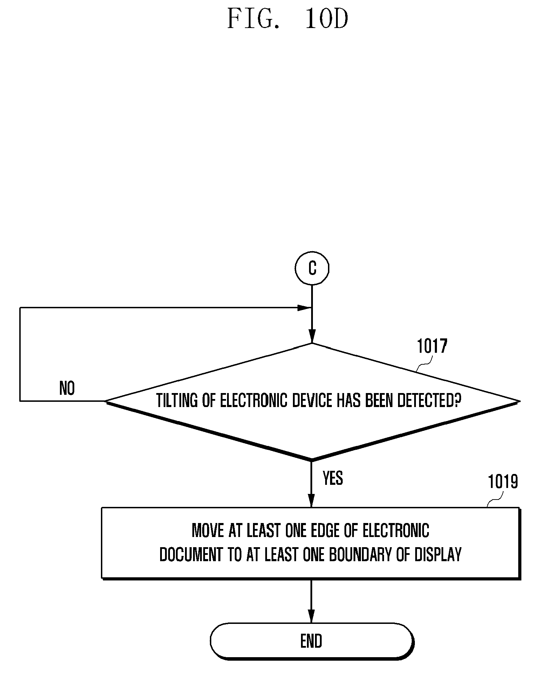

Referring to FIG. 10D, the electronic device 200 can detect tilting of the electronic device 200 in operation 1017 after operation C. The electronic device 200 can detect the tilting of the electronic device 200 using at least one of the gyro sensor 240B and the acceleration sensor 240E which are included in the sensor module 240. The electronic device 200 may repeat operation 1017 when the electronic device 200 does not detect the tilting of the electronic device. When the electronic device 200 detects the tilting of the electronic device, the electronic device 200 can move at least one edge of the electronic document to at least one boundary of the display 260 in operation 1019.

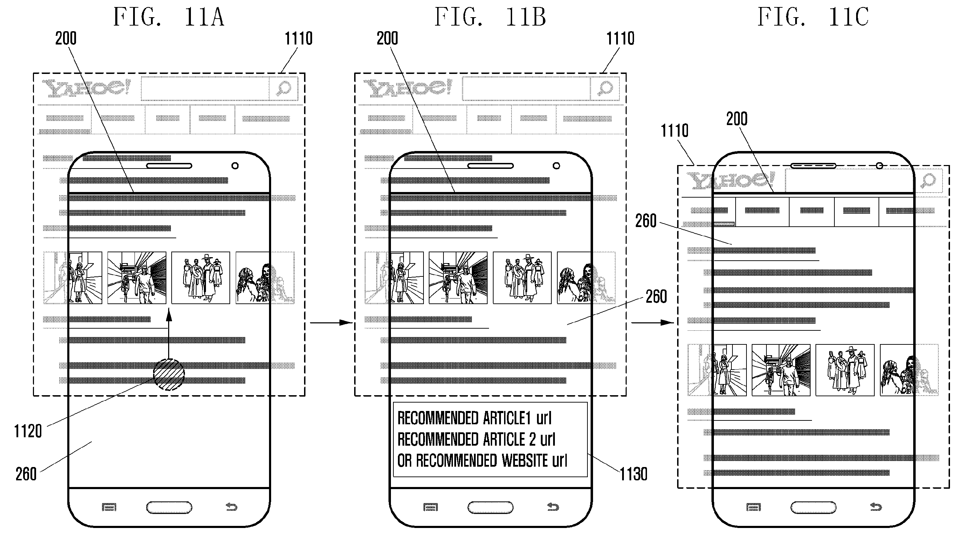

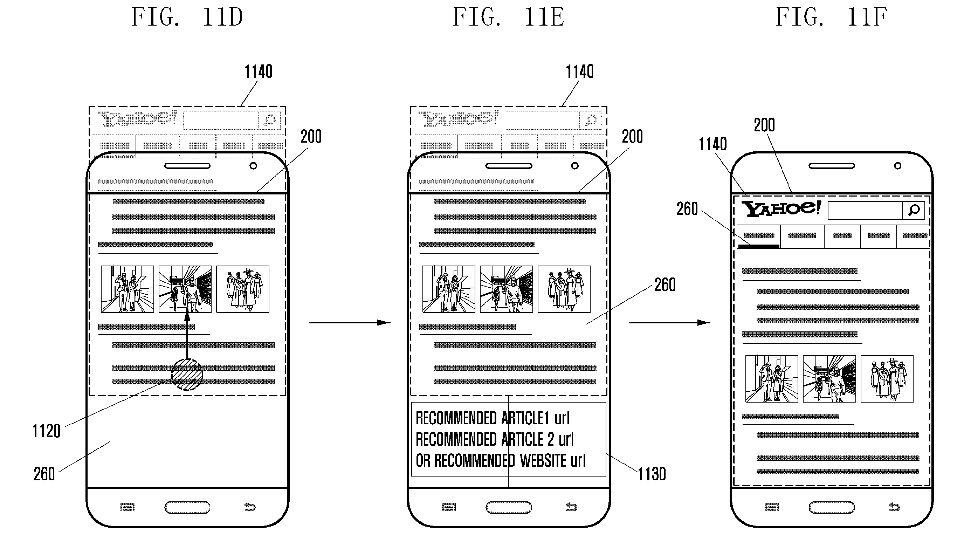

FIGS. 11A to 11F are views illustrating a method for displaying an electronic document by an electronic device according to the flowcharts of FIGS. 10A to 10D, according to various embodiments of the present disclosure.

Referring to FIG. 11A, the electronic device 200 can move an electronic document 1110 according to a received additional first user input 1120. When the electronic device 200 moves the electronic document 1110 according to the received additional first user input 1120, at least one edge of the electronic document 1110 is spaced apart from at least one boundary of the display 260, and the electronic device 200 may display a separated area.

Referring to FIG. 11B, the electronic device 200 may display additional information (for example, a URL) related to the electronic document 1110 in an area between at least one edge of the electronic document 1110 moved according to the received additional first user input and at least one boundary of the display 260. The electronic device 200 may display the additional information related to the electronic document 1110 in an additional information area 1130.

According to various embodiments of the present disclosure, the displayed additional information area 1130 (for example, an area between edges of an electronic document spaced apart from a boundary of the display 260) may be a kind of URL link display area.

The additional information or URL may relate to information similar to or related to an electronic document which a user is currently viewing.

Referring to FIG. 11C, when the electronic device 200 receives the second user input for an icon displayed in at least one edge of the electronic document 1110, detects tilting of the electronic device 200, and/or receives the third user input, the electronic device 200 can move at least one edge of the electronic document 1110 to at least one boundary of the display 260.

The operations of FIGS. 11D to 11F are substantially the same as the operations of FIGS. 11A to 11C, and FIGS. 11D to 11F are views illustrating a case where the electronic document 1140 fits on or is smaller than a screen of the display 260.

Referring to FIGS. 11D to 11F, the electronic device 200 may display additional information or a URL related to the electronic document 1140 in an area between at least one edge of the electronic document 1140 moved according to the received additional first user input and at least one boundary of the display 260. When the electronic device 200 receives the second user input for an icon displayed in at least one edge of the electronic document 1140, detects tilting of the electronic device 200, and/or receives the third user input, the electronic device 200 can move at least one edge of the electronic document 1140 to at least one boundary of the display 260.

While the present disclosure has been shown and described with reference to various embodiments thereof, it will be understood by those skilled in the art that various changes in form and detail may be made therein without departing from the spirit and scope of the present disclosure as defined by the appended claims and their equivalents.

## Claims

1. A method for displaying an electronic document by an electronic device, the method comprising:
moving the electronic document in a display according to a user input;
outputting an alert and temporarily stopping the moving of the electronic document when at least one edge of the electronic document reaches at least one boundary of the display; and
displaying the electronic document having the at least one edge of the electronic document spaced apart from the at least one boundary of the display when an additional user input is received.

2. The method of claim 1, further comprising determining whether the at least one edge of the electronic document has reached the at least one boundary of the display.

3. The method of claim 1,
wherein the outputting of the alert includes at least one of a visual alert and an auditory alert, and
wherein the visual alert includes at least one of:
animation operations in which a color of a predetermined area of an edge of the electronic document is varied, or
animation operations in which the electronic document performs a bouncing motion or a damped motion, on the display.

4. The method of claim 1, wherein the temporarily stopping of the moving of the electronic document further includes displaying the electronic document in a form in which at least one edge of the electronic document is in contact with at least one boundary of the display.

5. The method of claim 1, wherein the displaying of the electronic document while spacing the at least one edge of the electronic document apart from the at least one boundary of the display further includes displaying the electronic document without moving the electronic document when the at least one boundary of the electronic document is spaced a predetermined distance apart from the at least one boundary of the display.

6. The method of claim 1, wherein the displaying of the electronic document while the at least one edge of the electronic document is spaced apart from the at least one boundary of the display further includes displaying an additional information display area in a space in which the at least one edge of the electronic document is spaced apart from the at least one boundary of the display.

7. The method of claim 6, wherein the displaying of the additional information display area further comprises:
displaying additional information related to the electronic document in the additional information display area;
wherein the displaying of the additional information related to the electronic document further comprises one of:
displaying at least one of a file name related to the electronic document, a generation date, a file format, a resolution, a file size, a modification date, an electronic document generator, and a file generation location;
displaying a uniform resource locator (URL) related to the electronic document;
controlling an edit to the additional information according to a user input;
controlling a display of the edited additional information; and
redirecting the display to the corresponding URL to display a web document when a user input for the URL is received.

8. The method of claim 1 or 7, further comprising one of:
displaying an icon in an edge of the electronic document displayed to be spaced apart from at least one boundary of the display;
displaying the electronic document in a form in which the edge of the electronic document is in contact with the at least one boundary of the display, when a user input for the icon is received;
displaying the electronic document in a form in which an edge of the electronic document is in contact with at least one boundary of the display when a user input which is in the opposite direction of the additional user input is received; and
displaying the electronic document in a form in which an edge of the electronic document is in contact with at least one boundary of the display when titling of the electronic device is detected,
wherein the direction of the additional user input is the same as the direction of the user input, and
wherein the additional user input is consecutive with or inconsecutive with the user input.

9. An electronic device, the electronic device comprising:
a display including a touch sensitive device; and
a processor, wherein the processor is configured to:
control a movement of an electronic document in the display,
output an alert and temporarily stop moving the electronic document in the display when at least one edge of the electronic document reaches at least one boundary of the display, and
display the electronic document having the at least one edge spaced apart from the at least one boundary of the display when an additional user input is received.

10. The electronic device of claim 9, wherein the processor is further configured to determine whether at least one edge of the electronic document has reached at least one boundary of the display.

11. The electronic device of claim 9,
wherein the processor is further configured to output at least one of a visual alert and an auditory alert as an alert, and
wherein the visual alert is at least one of:
an animation operation in which a color of a predetermined area of an edge of the electronic document is varied, or
an animation operation in which the electronic document performs a bouncing motion or a damped motion, on the display.

12. The electronic device of claim 9, wherein the processor is further configured to control a display of the electronic document in a form in which at least one edge of the electronic document is in contact with at least one boundary of the display, when the electronic device stops moving the electronic document.

13. The electronic device of claim 9,
wherein, when the electronic device displays the electronic document having at least one edge spaced apart from at least one boundary of the display, if the at least one edge of the electronic document is spaced a predetermined distance apart from the at least one boundary of the display, the processor is further configured to control a display of the electronic document without moving the electronic document.

14. The electronic device of claim 9, wherein, when the electronic device displays the electronic document having the at least one edge of the electronic document spaced apart from the at least one boundary of the display,
the processor is one of further configured:
to control a display of an additional information display area in a space in which at least one edge of the electronic document is spaced apart from at least one boundary of the display, to control a display of additional information related to the electronic document in the additional information display area when the electronic device displays the additional information display area, to control a display of at least one of a file name related to the electronic document, a generation date, a file format, a resolution, a file size, a modification date, an electronic document generator, and a file generation location when the electronic device displays the additional information related to the electronic document, to control a display of a uniform resource locator (URL) related to the electronic document when the electronic device displays the additional information related to the electronic document, to control an edit to the additional information according to a user input, to control a display of the edited additional information, to control a redirection to the corresponding URL, and to control a display of a web document when a user input for the URL is received.

15. The electronic device of claim 9 or 14, wherein the processor is one of further configured to:
control a display of an icon in an edge of the electronic document displayed to be spaced apart from at least one boundary of the display,
control a display of the electronic document in a form in which the edge of the electronic document is in contact with the at least one boundary of the display when a user input for the icon is received,
control a display of the electronic document in a form in which an edge of the electronic document is in contact with at least one boundary of the display when a user input in the opposite direction of the additional user input is received, and
control a display of the electronic document in a form in which an edge of the electronic document is in contact with at least one boundary of the display when tilting of the electronic device is detected,
wherein the direction of the additional user input is the same as the direction of the user input, and
wherein the additional user input is consecutive with or inconsecutive with the user input.
